# EUROPÄISCHE PATENTSCHRIFT

(11) **EP 3 033 825 B1**
(45) Veröffentlichungstag und Bekanntmachung des Hinweises auf die Patenterteilung: **07.06.2017**
(21) Anmeldenummer: 14766956.8
(22) Anmeldetag: 11.09.2014
(51) Int. Cl.: H02K 9/06, H02K 9/08, H02K 9/10, H02K 1/32, H02K 7/18

(54) **EINRICHTUNG ZUM ABLENKEN VON ZUMINDEST EINEM TEIL EINES AXIAL IN EINEM ZWISCHEN EINEM ROTOR UND EINEM STATOR EINER ROTIERENDEN ELEKTRISCHEN MASCHINE ANGEORDNETEN ZWISCHENRAUM STRÖMENDEN KÜHLFLUIDS**
DEVICE FOR DEFLECTING AT LEAST ONE PORTION OF A COOLING FLUID FLOWING AXIALLY IN A SPACE BETWEEN A ROTOR AND A STATOR OF A ROTATING ELECTRIC MACHINE
DISPOSITIF DE DÉVIATION D'AU MOINS UNE PARTIE D'UN FLUIDE DE REFROIDISSEMENT S'ÉCOULANT DANS UN ESPACE INTERCALAIRE DISPOSÉ ENTRE UN ROTOR ET UN STATOR D'UNE MACHINE ÉLECTRIQUE ROTATIVE

(30) Priorität: 14.10.2013 EP 13188456
(43) Veröffentlichungstag der Anmeldung: 22.06.2016
(73) Patentinhaber: Siemens Aktiengesellschaft, 80333 München (DE)
(72) Erfinder: GRAU SORARRAIN, Esteban, 40217 Düsseldorf (DE); JÄKEL, Christian, 47169 Duisburg (DE); KOEBE, Mario, 45478 Mülheim an der Ruhr (DE); KOWALSKI, Matthias, 45478 Mülheim an der Ruhr (DE); LEHMANN, Christoph, 47506 Neukirchen-Vluyn (DE); MASHKIN, Andrey, 50672 Köln (DE); PLOTNIKOVA, Olga, 42369 Wuppertal (DE); SCHILD, Carolin, 45478 Mülheim an der Ruhr (DE)
(86) Internationale Anmeldenummer: PCT/EP2014/069360
(87) Internationale Veröffentlichungsnummer: WO 2015/055355

(56) Entgegenhaltungen:
- EP-A2- 1 734 641
- DE-A1- 1 613 111
- DE-A1- 3 410 760
- GB-A- 2 470 107
- JP-A- 2003 319 612
- JP-A- 2006 074 866
- JP-A- 2010 104 202
- US-A- 5 086 246

## Beschreibung

Die Erfindung betrifft eine Einrichtung zum Ablenken von zumindest einem Teil eines axial in einem zwischen einem Rotor und einem Stator einer rotierenden elektrischen Maschine, insbesondere eines Turbogenerators, angeordneten Zwischenraum strömenden Kühlfluids.

Des Weiteren betrifft die Erfindung eine einen Rotor aufweisende Rotoreinheit für eine rotierende elektrische Maschine, insbesondere für einen Turbogenerator, sowie eine rotierende elektrische Maschine, insbesondere einen Turbogenerator, mit einem Stator und einem Rotor.

Ferner betrifft die Erfindung ein Verfahren zum Kühlen einer einen Rotor und einen Stator aufweisenden rotierenden elektrischen Maschine, insbesondere eines Turbogenerators, wobei ein Kühlfluid in einen sich axial zwischen dem Rotor und dem Stator erstreckenden Zwischenraum eingeleitet wird.

Rotierende elektrische Maschinen in Form von Turbogeneratoren werden in Kraftwerken zum Erzeugen von elektrischer Energie eingesetzt. Hierzu ist ein Turbogenerator mechanisch mit wenigstens einer Gasturbine und/oder einer Dampfturbine gekoppelt, wobei der Turbogenerator zusammen mit der Gasturbine einen Turbosatz bildet.

Während des Betriebs einer rotierenden elektrischen Maschine wird zwangsläufig Wärme in dem Stator und/oder dem Rotor der rotierenden elektrischen Maschine erzeugt. Diese Verlustwärme entsteht durch Umwandlung von mechanischer Energie in elektrische Energie mittels der rotierenden elektrischen Maschine. Die in einem Stator und/oder einem Rotor einer rotierenden elektrischen Maschine erzeugte Wärme muss zu einem sicheren Betrieb der rotierenden elektrischen Maschine aus der rotierenden elektrischen Maschine abgeführt werden. Dies ist insbesondere deshalb erforderlich, da an dem Stator und/oder dem Rotor elektrische Isolierungen vorhanden sind, welche ab Erreichen einer bestimmten Temperatur beeinträchtigt werden würden, was zu schädigenden elektrischen Kurzschlüssen führen könnte. Je mehr Wärme aus einer rotierenden elektrischen Maschine abgeführt wird, desto höher kann die rotierende elektrische Maschine ausgelastet werden, was mit einer entsprechenden Leistungssteigerung einhergeht. Die JP 2006 074866 A beschäftigt sich mit der Kühlung einer elektrischen Maschine.

Herkömmlich wird zur Wärmeabführung aus einer rotierenden elektrischen Maschine bzw. zur Kühlung des Stators und/oder des Rotors der rotierenden elektrischen Maschine ein Kühlfluid in Form von Umgebungsluft, Wasser, Wasserstoff und/oder einem Wasserstoff enthaltenden Gemisch verwendet. Das Kühlfluid wird an beiden axialen Enden der rotierenden elektrischen Maschine axial zwischen den Stator und den Rotor eingeleitet und meist in der Mitte der rotierenden elektrischen Maschine radial aus der rotierenden elektrischen Maschine abgeführt.

Die Wärmeerzeugung in einem Stator und/oder einem Rotor einer rotierenden elektrischen Maschine erfolgt üblicherweise nicht gleichmäßig. Das soll heißen, dass es Bereiche der rotierenden elektrischen Maschine gibt, in denen mehr Wärme als in anderen Bereichen der rotierenden elektrischen Maschine erzeugt wird. Die Bereiche, in denen mehr Wärme erzeugt wird und/oder welche nicht ausreichend gekühlt werden, werden auch als "Hot-Spots" bezeichnet. In solchen Hot-Spots kann es durch die betriebsbedingte Wärmeerzeugung schneller zu unzulässigen und schädigenden Überhitzungen kommen als in weniger mit Wärme beaufschlagten Bereichen einer rotierenden elektrischen Maschine. Hierdurch kann eine herkömmliche rotierende elektrische Maschine nur soweit ausgelastet werden, wie es die in den Hot-Spots angeordneten Materialien für einen sicheren Betrieb der rotierenden elektrischen Maschine erlauben.

Nachteilig ist bei der herkömmlichen Verwendung eines Kühlfluids beispielsweise in Form von Umgebungsluft zur Wärmeabführung zudem, dass die Umgebungsluft beim Erreichen eines Hot-Spots bereits so viel aus anderen Bereichen einer rotierenden elektrischen Maschine stammende Wärme aufgenommen hat, dass keine ausreichende Kühlung eines Hot-Spots mehr möglich ist. Folglich kann mittels einer herkömmlichen Wärmeabführung, insbesondere unter Verwendung von Umgebungsluft, ein sicherer Betrieb einer rotierenden elektrischen Maschine lediglich bis zu einer durch die in den Hot-Spots vorliegende Wärmebelastung bedingten Auslastungsobergrenze dauerhaft sicher betrieben werden.

Aufgabe der Erfindung ist es, die Auslastbarkeit einer rotierenden elektrischen Maschine, insbesondere eines Turbogenerators, zu erhöhen und einen sicheren Betrieb der rotierenden elektrischen Maschine zu ermöglichen.

Die erfindungsgemäße Einrichtung zum Ablenken von zumindest einem Teil eines axial in einem zwischen einem Rotor und einem Stator einer rotierenden elektrischen Maschine, insbesondere eines Turbogenerators, angeordneten Zwischenraum strömenden Kühlfluids weist wenigstens eine an einem vorgebbaren Abschnitt einer Außenseite des Rotors und in dem Zwischenraum anordbare Schaufel auf, welche derart ausgebildet und anordbar ist, dass mit ihr ein Teil des in dem Zwischenraum strömenden Kühlfluids radial in Richtung des Stators ablenkbar ist.

Die Einrichtung weist wenigstens ein Verbindungselement auf, über das die Schaufel mit dem Rotor verbindbar ist, wobei an dem Verbindungselement zumindest eine sich parallel zur Längsachse des Rotors erstreckende Durchlassöffnung derart angeordnet ist, dass durch sie ein Teil des auf das Verbindungselement auftreffenden Kühlfluids axial hindurchströmen kann. Die Einrichtung kann bei Bedarf auch zwei oder mehrere Verbindungselemente aufweisen, deren Anzahl vorzugsweise der Anzahl der Schaufeln der Einrichtung entspricht. Ein Verbindungselement kann auch zwei oder mehrere parallel zur Längsachse des Rotors angeordnete Durchlassöffnungen aufweisen. Eine Durchlassöffnung weist vorzugsweise einen für ihre Durchströmung mit einem Teil des Kühlfluids optimierten Querschnitt auf.

Durch die Schaufel wird ein Teil des axial in dem Zwischenraum zwischen dem Rotor und dem Stator angeordneten Kühlfluids radial nach außen in Richtung des Stators beschleunigt. Hierdurch kann mehr Wärme von einem mit dem abgelenkten Teil des Kühlfluids beaufschlagten Abschnitt des Stators abgeführt und folglich dieser Abschnitt besser durch Konvektion gekühlt werden. Vorzugsweise wird mittels der Schaufel ein an dem Stator angeordneter Hot-Spot gekühlt.

Die verbesserte Kühlung des Stators und somit der rotierenden elektrischen Maschine ermöglicht eine Erhöhung der Auslastbarkeit einer rotierenden elektrischen Maschine und einen sicheren Betrieb der rotierenden elektrischen Maschine. Die erfindungsgemäße Einrichtung kann bei einer neuhergestellten rotierenden elektrischen Maschine vorhanden sein. Auch kann eine bereits vorhandene rotierende elektrische Maschine mit einer erfindungsgemäßen Einrichtung nachgerüstet werden.

Falls erforderlich kann die erfindungsgemäße Einrichtung auch zwei oder mehrere Schaufeln aufweisen, welche über die axiale Erstreckung des Rotors und/oder über den Umfang des Rotors in Form von Schaufelreihen angeordnet werden können.

Bevorzugt ist die Schaufel als Radialschaufel ausgebildet, auf die ein Teil des in dem Zwischenraum strömenden Kühlfluids auftrifft. Radialschaufeln sind bekannt und können in geeigneter Form und Anzahl relativ zueinander an dem Rotor angeordnet werden.

Bevorzugt sind die Schaufel und das Verbindungselement zur Ausbildung eines einzelnen Bauteils miteinander verbunden. Dies macht eine einfache Handhabung der Schaufel und des Verbindungselementes sowie eine einfache Anordnung der Schaufel und des Verbindungselementes an einem Rotor möglich. Die Schaufel kann zur Ausbildung der einzelnen Baueinheit insbesondere stoffschlüssig mit dem Verbindungselement verbunden sein.

Die Einrichtung umfasst bevorzugt zwei oder mehrere an dem vorgebbaren Abschnitt des Rotors über den Umfang des Rotors verteilt anordbare Schaufeln. Über die Anzahl der an einem vorgebbaren Abschnitt des Rotors anordbaren Schaufeln sowie deren Formgebung kann die Größe des von den Schaufeln radial in Richtung des Stators abgelenkten Teils des Kühlfluids variiert werden, um ein optimales Kühlungsergebnis herbeizuführen.

Bevorzugt ist die Schaufel eine Schaufel eines Trommelläufer-Radialgebläses, welches mit dem Rotor verbunden ist. Trommelläufer-Radialgebläse sind bekannt und erzeugen bei einer Drehung um ihre Längsachse eine radiale Fluidströmung, mit der wenigstens ein Hot-Spot am Stator gekühlt werden kann. Vorzugsweise ist jede Schaufel des Trommelläufer-Radialgebläses eine Schaufel im Sinne der Erfindung.

An dem Trommelläufer-Radialgebläse ist bevorzugt zumindest eine sich parallel zur Längsachse des Rotors erstreckende Durchlassöffnung derart angeordnet, dass durch sie ein Teil des auf das Trommelläufer-Radialgebläse auftreffenden Kühlfluids axial hindurchströmen kann. An dem Trommelläufer-Radialgebläse können auch zwei oder mehrere parallel zur Längsachse des Rotors angeordnete Durchlassöffnungen angeordnet sein. Eine Durchlassöffnung weist vorzugsweise einen für ihre Durchströmung mit einem Teil des Kühlfluids optimierten Querschnitt auf.

Die erfindungsgemäße Rotoreinheit für eine rotierende elektrische Maschine, insbesondere einen Turbogenerator, weist einen Rotor und wenigstens eine an zumindest einem vorgebbaren Abschnitt einer Außenseite des Rotors angeordnete Einrichtung gemäß einer der vorgenannten Ausgestaltungen oder einer beliebigen Kombination derselben auf. Mit dieser Rotoreinheit, welche zur Ausbildung einer rotierenden elektrischen Maschine, insbesondere eines Turbogenerators, verwendet werden kann, sind die oben mit Bezug auf die Einrichtung genannten Vorteile entsprechend verbunden.

Die erfindungsgemäße rotierende elektrische Maschine, insbesondere der Turbogenerator, umfasst einen Stator, einen Rotor und wenigstens eine Einrichtung gemäß einer der vorgenannten Ausgestaltungen der Einrichtung oder einer beliebigen Kombination derselben auf. Mit dieser rotierenden elektrischen Maschine, welche entsprechend eine vorbeschriebene Rotoreinheit aufweisen kann, sind die oben mit Bezug auf die Einrichtung genannten Vorteile entsprechend verbunden. Insbesondere kann die erfindungsgemäße rotierende elektrische Maschine unter hoher Auslastung sicher betrieben werden.

Nach dem erfindungsgemäßen Verfahren zum Kühlen einer einen Rotor und einen Stator aufweisenden rotierenden elektrischen Maschine, insbesondere eines Turbogenerators, wird ein Teil eines in einen sich axial zwischen dem Rotor und dem Stator erstreckenden Zwischenraum eingeleiteten Kühlfluids an wenigstens einem vorgebbaren Abschnitt der rotierenden elektrischen Maschine radial in Richtung des Stators abgelenkt. Mit diesem Verfahren sind die oben mit Bezug auf die Einrichtung genannten Vorteile entsprechend verbunden.

Der Teil des in den Zwischenraum eingeleiteten Kühlfluids wird bevorzugt mittels wenigstens einer in dem vorgebbaren Abschnitt der rotierenden elektrischen Maschine an einer Außenseite des Rotors und in dem Zwischenraum angeordnete Schaufel radial in Richtung des Stators abgelenkt. Vorzugsweise sind zwei oder mehrere Schaufeln, beispielsweise in Form von Schaufelreihen, an der Außenseite des Rotors angeordnet. Die Anordnung von Schaufeln an der Außenseite des Rotors stellt eine konstruktiv einfache und kostengünstige Möglichkeit zur Realisierung des Verfahrens dar. Die Schaufel kann als Radialschaufel oder als Schaufel eines Trommelläufer-Radialgebläses ausgebildet sein.

Im Folgenden werden bevorzugte Ausführungsformen der erfindungsgemäßen rotierenden elektrischen Maschine anhand der beigefügten schematischen Zeichnungen erläutert. Es zeigen:
Fig. 1 einen Ausschnitt eines Längsschnitts durch ein Ausführungsbeispiel für eine erfindungsgemäße rotierende elektrische Maschine, und
Fig. 2 einen Ausschnitt eines Längsschnitts durch ein weiteres Ausführungsbeispiel für eine erfindungsgemäße rotierende elektrische Maschine.

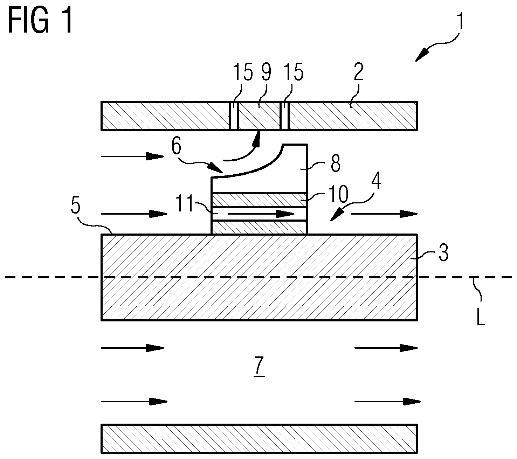

Figur 1 zeigt eine beispielhafte Ausführungsform eine erfindungsgemäßen rotierende elektrische Maschine 1 in Form eines Turbogenerators mit einem Stator 2 und einem Rotor 3. Der Rotor 3 ist Teil einer Rotoreinheit 4, die zudem eine an einem vorgebbaren Abschnitt einer Außenseite 5 des Rotors 3 angeordnete Einrichtung 6 zum Ablenken von zumindest einem Teil eines axial in einem zwischen dem Rotor 3 und dem Stator 2 angeordneten Zwischenraum 7 strömenden Kühlfluids aufweist. Die Strömung des Kühlfluids ist durch die Pfeile angedeutet.

Die Einrichtung 6 weist mehrere an einem vorgebbaren Abschnitt einer Außenseite 5 des Rotors 3, in dem Zwischenraum 7 und über dem Umfang des Rotors 3 verteilt angeordnete Schaufeln 8 in Form von Radialschaufeln auf, von denen in Figur 1 lediglich eine Schaufel 8 zu sehen ist. Die Schaufeln 8 sind derart ausgebildet und angeordnet, dass mit ihnen ein Teil des auf die Schaufeln 8 auftreffenden Kühlfluids radial in Richtung des Stators 2 abgelenkt wird. Der abgelenkte Teil des auf die Schaufeln 8 auftreffenden Kühlfluids wird in Richtung eines an dem Stator 2 angeordneten Hot-Spots 9 abgelenkt. Im Bereich des Hot-Spots 9 sind an dem Stator 2 Kühlöffnungen 15 angeordnet, durch die der abgelenkte Teil des Kühlfluids zum Kühlen des Hot-Spots 15 strömen kann.

Die Einrichtung 6 weist des Weiteren mehrere Verbindungselemente 10 auf, über welche die Schaufeln 8 mit dem Rotor 3 verbunden sind, wobei in Figur 1 lediglich ein Verbindungselement 10 dargestellt ist. An dem Verbindungselement 10 ist eine sich parallel zur Längsachse L des Rotors 3 erstreckende Durchlassöffnung 11 derart angeordnet, dass durch sie ein Teil des auf das Verbindungselement 10 auftreffenden Kühlfluids axial hindurchströmen kann. Die Schaufel 8 und das Verbindungselement 10 sind zur Ausbildung eines einzelnen Bauteils miteinander verbunden.

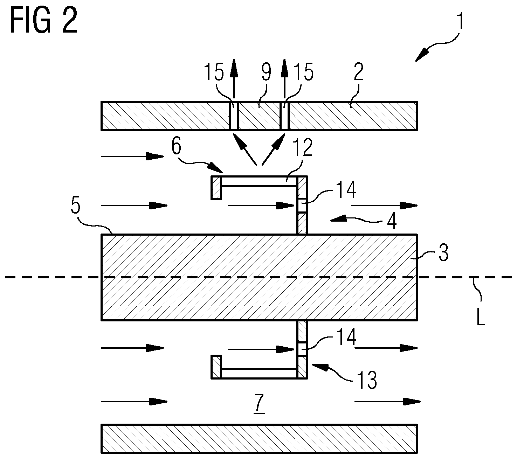

Figur 2 zeigt eine weitere beispielhafte Ausführungsform eine erfindungsgemäßen rotierende elektrische Maschine 1 in Form eines Turbogenerators mit einem Stator 2 und einem Rotor 3. Der Rotor 3 ist Teil einer Rotoreinheit 4, die zudem eine an einem vorgebbaren Abschnitt einer Außenseite 5 des Rotors 3 angeordnete Einrichtung 6 zum Ablenken von zumindest einem Teil eines axial in einem zwischen dem Rotor 3 und dem Stator 2 angeordneten Zwischenraum 7 strömenden Kühlfluids aufweist. Die Strömung des Kühlfluids ist durch die Pfeile angedeutet.

Die Einrichtung 6 weist mehrere an einem vorgebbaren Abschnitt einer Außenseite 5 des Rotors 3, in dem Zwischenraum 7 und über dem Umfang des Rotors 3 verteilt angeordnete Schaufeln 12 auf, von denen in Figur 1 lediglich eine Schaufel 12 zu sehen ist und die durch Schaufeln eines Trommelläufer-Radialgebläses 13 gebildet sind, welches mit dem Rotor 3 verbunden ist. Die Schaufeln 12 sind derart ausgebildet und angeordnet, dass mit ihnen ein Teil des in dem Zwischenraum 7 strömenden, auf die Schaufeln 12 auftreffenden Kühlfluids radial in Richtung des Stators 2 abgelenkt wird. Der abgelenkte Teil des auf die Schaufeln 12 auftreffenden Kühlfluids wird in Richtung eines an dem Stator 2 angeordneten Hot-Spots 9 abgelenkt. Im Bereich des Hot-Spots 9 sind an dem Stator 2 Kühlöffnungen 15 angeordnet, durch die der abgelenkte Teil des Kühlfluids zum Kühlen des Hot-Spots 15 strömen kann.

An dem Trommelläufer-Radialgebläse 13 sind mehrere sich parallel zur Längsachse L des Rotors 3 erstreckende Durchlassöffnungen 14 derart angeordnet, dass durch sie ein Teil des in dem Zwischenraum 7 strömenden Kühlfluids axial hindurchströmen kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einrichtung (6) zum Ablenken von zumindest einem Teil eines axial in einem zwischen einem Rotor (3) und einem Stator (2) einer rotierenden elektrischen Maschine (1), insbesondere eines Turbogenerators, angeordneten Zwischenraum (7) strömenden Kühlfluids, mit wenigstens einer an einem vorgebbaren Abschnitt einer Außenseite (5) des Rotors (3) und in dem Zwischenraum (7) anordbarer Schaufel (8, 12), welche derart ausgebildet und anordbar ist, dass mit ihr ein Teil des in dem Zwischenraum (7) strömenden Kühlfluids radial in Richtung des Stators (2) ablenkbar ist,
**dadurch gekennzeichnet, dass**
die Einrichtung (6) ferner wenigstens ein Verbindungselement (10) aufweist, über das die Schaufel (8) mit dem Rotor (3) verbindbar ist, wobei an dem Verbindungselement (10) zumindest eine sich parallel zur Längsachse (L) des Rotors (3) erstreckende Durchlassöffnung (11) derart angeordnet ist, dass durch sie ein Teil des auf das Verbindungselement (10) auftreffenden Kühlfluids axial hindurchströmen kann.

2. Einrichtung (6) gemäß Anspruch 1,
wobei die Schaufel (8) als Radialschaufel ausgebildet ist, auf die ein Teil des in dem Zwischenraum (7) strömenden Kühlfluids auftrifft.

3. Einrichtung (6) gemäß Anspruch 1,
wobei die Schaufel (8) und das Verbindungselement (10) zur Ausbildung eines einzelnen Bauteils miteinander verbunden sind.

4. Einrichtung (6) gemäß einem der Ansprüche 2 bis 3, aufweisend zwei oder mehrere an dem vorgebbaren Abschnitt des Rotors (3) über den Umfang des Rotors (3) verteilt anordbare Schaufeln (8).

5. Einrichtung gemäß Anspruch 1,
wobei die Schaufel (12) eine Schaufel eines Trommelläufer-Radialgebläses (13) ist, welches mit dem Rotor (3) verbunden ist.

6. Einrichtung gemäß Anspruch 5,
wobei an dem Trommelläufer-Radialgebläse (13) zumindest eine sich parallel zur Längsachse (L) des Rotors (3) erstreckende Durchlassöffnung (14) derart angeordnet ist, dass durch sie ein Teil des in dem Zwischenraum (7) strömenden Kühlfluids axial hindurchströmen kann.

7. Rotoreinheit (4) für eine rotierende elektrische Maschine (1), insbesondere für einen Turbogenerator,
aufweisend einen Rotor (3), **gekennzeichnet durch** wenigstens eine an zumindest einem vorgebbaren Abschnitt einer Außenseite (5) des Rotors (3) angeordnete Einrichtung (6) gemäß einem der Ansprüche 1 bis 6.

8. Rotierende elektrische Maschine (1), insbesondere Turbogenerator, mit einem Stator (2) und einem Rotor (3), **gekennzeichnet durch** wenigstens eine Einrichtung (6) gemäß einem der Ansprüche 1 bis 7.

9. Verfahren zum Kühlen einer einen Rotor (3) und einen Stator (2) aufweisenden rotierenden elektrischen Maschine (1), insbesondere eines Turbogenerators,
wobei ein Kühlfluid in einen sich axial zwischen dem Rotor (3) und dem Stator (2) erstreckenden Zwischenraum (7) eingeleitet wird, wobei ein Teil des in den Zwischenraum (7) eingeleiteten Kühlfluids an wenigstens einem vorgebbaren Abschnitt der rotierenden elektrischen Maschine (1) radial in Richtung des Stators (2) mit an einer Außenseite (5) des Rotors (3) angeordneten Schaufel (8, 12) abgelenkt wird, **dadurch gekennzeichnet, dass**
ein Verbindungselement (10) derart angeordnet wird, dass die Schaufel (8, 12) mit einem Rotor (3) verbunden wird,
wobei das Verbindungselement (10) mit einer sich parallel zur Längsachse (L) des Rotors (3) erstreckenden Durchlassöffnung (11) derart ausgebildet wird, dass durch sie ein Teil des auf das Verbindungselement (19) auftreffenden Kühlfluids hindurchströmen kann.

10. Verfahren gemäß Anspruch 9,
wobei der Teil des in den Zwischenraum (7) eingeleiteten Kühlfluids mittels wenigstens einer in dem vorgebbaren Abschnitt der rotierenden elektrischen Maschine (1) an einer Außenseite (5) des Rotors (3) und in dem Zwischenraum (7) angeordnete Radialschaufel (8) radial in Richtung des Stators (2) abgelenkt wird.

## Claims

1. Device (6) for deflecting at least a portion of a cooling fluid that is flowing axially in an intermediate space (7) that is arranged between a rotor (3) and a stator (2) of a rotating electrical machine (1), in particular a turbogenerator, having at least one blade (8, 12) that can be arranged on a predetermined section of an outer face (5) of the rotor (3) and in the intermediate space (7), said blade being embodied and being able to be arranged in such a manner that a portion of the cooling fluid that is flowing in the intermediate space (7) can be deflected towards the stator (2) by means of said blade, **characterized in that**
the device (6) in addition comprises at least one connecting element (10) by way of which the blade (8) can be connected to the rotor (3), wherein at least one outlet opening (11) that extends parallel to the longitudinal axis (L) of the rotor (3) is arranged on the connecting element (10) in such a manner that a portion of the cooling fluid that makes contact with the connecting element (10) can flow axially through said outlet opening.

2. Device (6) according to Claim 1,
wherein the blade (8) is embodied as a radial blade and a portion of the cooling fluid that is flowing in the intermediate space (7) makes contact with said blade.

3. Device (6) according to Claim 1,
wherein the blade (8) and the connecting element (10) are connected to one another so as to form an individual unit.

4. Device (6) according to any one of Claims 2 to 3, comprising two or more blades (8) that can be arranged on the predetermined section of the rotor (3) distributed over the periphery of the rotor (3).

5. Device according to Claim 1,
wherein the blade (12) is a blade of a drum impeller radial blower (13) that is connected to the rotor (3).

6. Device according to Claim 5,
wherein at least one outlet opening (14) that extends parallel to the longitudinal axis (L) of the rotor (3) is arranged on the drum impeller radial blower (13) in such a manner that a portion of the cooling fluid that is flowing in the intermediate space (7) can flow axially through said outlet opening.

7. Rotor unit (4) for a rotating electrical machine (1), in particular for a turbogenerator,
said rotor unit comprising a rotor (3), **characterized by** virtue of at least one device (6) according to any one of Claims 1 to 6, said device being arranged on at least one predetermined section of an outer face (5) of the rotor (3).

8. Rotating electrical machine (1), in particular turbogenerator, having a stator (2) and a rotor (3), **characterized by** virtue of at least one device (6) according to any one of Claims 1 to 7.

9. Method for cooling a rotating electrical machine (1), in particular a turbogenerator, said electrical machine comprising a rotor (3) and a stator (2),
wherein a cooling fluid is introduced into an intermediate space (7) that extends axially between the rotor (3) and the stator (2), wherein a portion of the cooling fluid that is introduced into the intermediate space (7) is deflected at at least one predetermined section of the rotating electrical machine (1) radially towards the stator (2) by means of blades (8, 12) arranged on an outer face (5) of the rotor (3),
**characterized in that**
a connecting element (10) is arranged such that the blade (8, 12) is connected to a rotor (3),
wherein the connecting element (10) is formed with an outlet opening (11), which extends parallel to the longitudinal axis (L) of the rotor (3), in such a manner that a portion of the cooling fluid that makes contact with the connecting element (10) can flow through said outlet opening.

10. Method according to Claim 9,
wherein the portion of the cooling fluid that is introduced into the intermediate space (7) is deflected radially towards the stator (2) by means of at least one radial blade (8) that is arranged in the predetermined section of the rotating electrical machine (1) on an outer face (5) of the rotor (3) and in the intermediate space (7).

## Revendications

1. Dispositif ( 6 ) de déviation d'au moins une partie d'un fluide de refroidissement passant dans un espace ( 7 ) intermédiaire, entre un rotor ( 3 ) et un stator ( 2 ) d'une machine ( 1 ) électrique tournante, notamment d'un turbogénérateur, comprenant au moins une aube ( 8, 12 ) pouvant être disposée sur une partie pouvant être prescrite d'un côté ( 5 ) extérieur du rotor ( 3 ) et dans l'espace ( 7 ) intermédiaire, laquelle aube est constituée et peut être montée de manière à ce que, par elle, une partie du fluide de refroidissement passant dans l'espace ( 7 ) intermédiaire, puisse être déviée radialement en direction du stator ( 2 ), **caractérisé en ce que**
le dispositif ( 6 ) comprend, en outre, au moins un élément ( 10 ) de liaison par lequel l'aube ( 8 ) peut être reliée au rotor ( 3 ), dans lequel, sur l'élément ( 10 ) de liaison, est disposée au moins une ouverture ( 11 ) de passage s'étendant parallèlement à l'axe ( L ) longitudinal du rotor ( 3 ), de manière à ce qu'une partie du fluide de refroidissement, arrivant sur l'élément ( 10 ) de liaison, puisse s'écouler axialement par cette ouverture.

2. Dispositif ( 6 ) suivant la revendication 1,
dans lequel l'aube ( 8 ) est constituée en aube radiale sur laquelle arrive une partie du fluide de refroidissement passant dans l'espace ( 7 ) intermédiaire.

3. Dispositif ( 6 ) suivant la revendication 1,
dans lequel l'aube ( 8 ) et l'élément ( 10 ) de liaison sont reliés entre eux pour constituer une pièce individuelle.

4. Dispositif ( 6 ) suivant l'une des revendications 2 à 3, comportant deux ou plusieurs aubes ( 8 ), pouvant être mises sur la partie pouvant être prescrite du rotor ( 3 ), en étant réparties sur le pourtour du rotor ( 3 ).

5. Dispositif suivant la revendication 1,
dans lequel l'aube ( 12 ) est une aube d'une soufflante ( 13 ) à flux radial à induit en tambour, qui est reliée au rotor ( 3 ).

6. Dispositif suivant la revendication 5,
dans lequel, sur la soufflante ( 3 ) à flux radial à induit en tambour, est montée au moins une ouverture ( 14 ) de passage, qui s'étend parallèlement à l'axe ( L ) longitudinal du rotor ( 3 ), de manière à ce qu'une partie du fluide de refroidissement, passant dans l'espace ( 7 ) intermédiaire, puisse s'écouler axialement en passant par cette ouverture.

7. Groupe ( 4 ) rotor pour une machine ( 1 ) électrique tournante, notamment pour un turbogénérateur, comportant un rotor ( 3 ), **caractérisé par** au moins un dispositif ( 6 ) suivant l'une des revendications 1 à 6, disposé sur au moins une partie pouvant être prescrite d'un côté ( 5 ) extérieur du rotor ( 3 ).

8. Machine ( 1 ) électrique tournante, notamment turbogénérateur, comprenant un stator ( 2 ) et un rotor ( 3 ), **caractérisée par** au moins un dispositif ( 6 ) suivant l'une des revendications 1 à 7.

9. Procédé de refroidissement d'une machine ( 1 ) électrique tournante ayant un rotor ( 3 ) et un stator ( 2 ), notamment d'un turbogénérateur,
dans lequel on envoie un fluide de refroidissement dans un espace ( 7 ) intermédiaire, s'étendant axialement entre le rotor ( 3 ) et le stator ( 2 ), dans lequel on dévie une partie du fluide de refroidissement envoyé dans l'espace ( 7 ) intermédiaire, sur au moins une aube ( 8, 12 ) montée radialement dans au moins une partie pouvant être prescrite de la machine ( 1 ) électrique tournante, en direction du stator ( 2 ), sur un côté ( 5 ) extérieur du rotor ( 3 ),
**caractérisé en ce que**
on dispose un élément ( 10 ) de liaison, de manière à relier l'aube ( 8, 12 ) à un rotor ( 3 ), l'élément ( 10 ) de liaison étant constitué en ayant une ouverture ( 11 ) de passage s'étendant, parallèlement à l'axe ( L ) longitudinal du rotor ( 3 ), de manière à ce qu'une partie du fluide de refroidissement, arrivant sur l'élément ( 19 ) de liaison, puisse passer par cette ouverture.

10. Procédé suivant la revendication 9,
dans lequel on dévie, radialement en direction du stator ( 2 ), la partie du fluide de refroidissement introduit dans l'espace ( 7 ) intermédiaire, au moyen d'au moins une aube ( 8 ) radiale disposée dans la partie pouvant être prescrite de la machine ( 1 ) électrique tournante, sur un côté ( 5 ) extérieur du rotor ( 3 ) et dans l'espace ( 7 ) intermédiaire.
